(19) Europäisches Patentamt / European Patent Office / Office européen des brevets

(11) **EP 3 301 544 A1**

(12) **EUROPEAN PATENT APPLICATION**

(43) Date of publication:
**04.04.2018 Bulletin 2018/14**

(21) Application number: **16306281.3**

(22) Date of filing: **30.09.2016**

(51) Int Cl.:
*G06F 3/01* (2006.01)  *G06F 1/16* (2006.01)
*G06T 19/00* (2011.01)  *G02B 27/01* (2006.01)
*A63F 13/216* (2014.01)  *A63F 13/217* (2014.01)
*A63F 13/65* (2014.01)  *A63F 13/67* (2014.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ALCATEL LUCENT**
**92100 Boulogne-Billancourt (FR)**

(72) Inventors:
• LIEVENS, Sammy
  2018 Antwerpen (BE)
• TYTGAT, Donny
  2018 Antwerpen (BE)
• STEVENS, Christoph
  2018 Antwerpen (BE)

(74) Representative: **D'Halleweyn, Nele Veerle Trees Gertrudis et al**
**Arnold & Siedsma**
**Bezuidenhoutseweg 57**
**2594 AC The Hague (NL)**

(54) **SYSTEM AND METHOD FOR CONTROLLING AN ALTERED-REALITY APPLICATION**

(57) A method for controlling an altered-reality application, the method comprising: obtaining a physical location of at least one user of the altered-reality application; and based on the or each respective physical location, arranging, in an altered-reality environment of the at least one user, the altered-reality environment being situated within the altered-reality application, at least one virtual stimulus configured for probabilistically directing movement of the at least one user in the altered-reality environment away from or towards the or each respective virtual stimulus; wherein the at least one virtual stimulus is selected from a plurality of virtual stimulus types occurring during predetermined normal operation of the altered-reality application.

FIG. 10

EP 3 301 544 A1

**Description**

Field of Invention

The present invention relates to altered reality (including virtual reality and augmented reality) applications. Particular embodiments relate to a method, a computer program product and a system, for controlling an altered-reality application.

Background

Typical altered-reality applications (including virtual-reality applications that completely situate themselves in a virtual reality, so without any link to the physical environment or reality, and augmented-reality applications that retain part or all of the physical reality while adding virtual parts) may encounter problems with respect to some aspects. An aspect thereof may for example include a hazardous location or situation — that is, a location where or a situation wherein one or more users of the altered-reality application may encounter a hazard, such as a physical object like a wall, a piece of furniture, a stairwell, etc., or a physical creature like another user of the altered-reality application, a pet, a person not involved in the altered-reality application, etc. In order to address these problems, typical altered-reality applications may provide some warnings.

In the case of virtual reality, a user typically has a head-mounted display (HMD) that completely obstructs a view of a physical environment of the user, and only shows a virtual environment to the user instead. Approaches to avoid the previously mentioned hazardous locations or situations in a virtual-reality application may for example include switching between showing the physical reality and the virtual reality on the HMD, and/or displaying a camera feed of the physical reality on a secondary display that typically is smaller than a main display of the HMD, and/or displaying warning messages such as alert icons etc. These approaches require constant user attention during the execution of the virtual-reality application, and/or require displaying information that is not related to the actual virtual-reality application. These approaches may therefore break immersion in the altered-reality application for the user, and, in the case that the altered-reality application is a game, may lead to bad gameplay.

In the case of augmented reality, a user may wear a head-mounted display (HMD) device or use a device such as a game console or a cell phone. The display of the HMD device may not (completely) obstruct view of the physical environment of the user, and may visually overlay virtual elements on the view of the physical environment. When using a cell phone or a game console also a user may still observe the physical environment in which he/she is situated. Since the user may still be able to perceive at least part of the physical reality, certain hazardous locations and situations may be avoided by the user him- or herself. However, some users do not always pay attention to them in view of their immersion in the game itself, leading to a potentially dangerous situation. Additionally, the user's view may not include other hazardous locations and situations, for example when these are outside the user's field of view. Moreover, the need to actively avoid these certain hazardous locations and situations by the user him- or herself may break immersion for the user, and, in the case that the altered-reality application is a game, this need may lead to user behaviour that is unaligned (i.e. considered abnormal) with the altered-reality application, which may lead to bad game play.

Summary

It is therefore an aim of embodiments of the present invention to help the user(s) of an altered-reality application to avoid hazardous locations and/or situations, while maintaining at least some degree of immersion in the altered-reality application to the user(s).

According to a first aspect of the present invention there is provided a method for controlling an altered-reality application. The method comprises: obtaining a physical location of at least one user of the altered-reality application; and, based on the or each respective physical location, arranging, in an altered-reality environment of the at least one user, the altered-reality environment being situated within the altered-reality application, at least one virtual stimulus configured for probabilistically directing movement of the at least one user in the altered-reality environment away from or towards the or each respective virtual stimulus. The at least one virtual stimulus is selected from a plurality of virtual stimulus types occurring during predetermined normal operation of the altered-reality application.

Embodiments of the present invention are based *inter alia* on the insight that arranging one or more virtual stimuli selected from a plurality of virtual stimulus types that occur during predetermined normal operation of the altered-reality application (e.g. operation of the altered-reality application which is in accordance with certain conditions that have been predetermined as 'normal', depending on the type and content of the altered-reality application) allows to help the at least one user of the altered-reality application to avoid hazardous locations and/or situations (because the virtual stimuli are configured for probabilistically directing movement of the at least one user in the altered-reality application away from or towards the respective virtual stimulus), while still maintaining at least some degree of immersion in the altered-reality application to the at least one user (because the virtual stimuli are selected from a plurality of virtual stimulus types that occur during predetermined normal operation of the altered-reality application. In this manner, the above described aim may be achieved.

According to various embodiments of the present invention, the plurality of virtual stimulus types occurring during predetermined normal operation of the altered-reality application comprises at least one of the following: a virtual hostile object type; a virtual friendly object type; a directional sound type; and a haptic signal type. In this way, immersive virtual stimuli, belonging to the altered-reality environment, can be used. Friendly virtual stimuli will thus be likely to attract the users in the application, while hostile stimuli will be likely to guide the users away from them.

According to various embodiments of the present invention, the method comprises: observing at least one response of the at least one user to at least one feature of the altered-reality application; and learning a behavioural pattern of the at least one user, wherein the or each respective behavioural pattern relates to the at least one previously observed response of the corresponding user. The learned behavioural pattern of the at least one user is taken into account for the arranging of the at least one virtual stimulus. In this way, the arranging of the at least one virtual stimulus can be individualized.

According to various embodiments of the present invention, the method comprises: obtaining a geometric mapping between a physical environment of the at least one user and the altered-reality environment of the at least one user; and determining region-score associations between volumetric regions of the physical environment and attraction scores representing whether movement of the at least one user is to be directed towards or away from the associated volumetric region. The arranging of the at least one virtual stimulus is performed based on the determined region-score associations and based on the geometric mapping. In this way, the arranging of the virtual stimuli can be clear and easy to calculate.

According to various embodiments of the present invention, the arranging of the at least one virtual stimulus comprises: determining at least one location situated in the real-world environment, which at least one location lacks an altered-reality environment correspondence according to the geometric mapping; and arranging the at least one virtual stimulus at the corresponding altered-reality location corresponding to said at least one location, wherein the at least one virtual stimulus is configured for directing a gaze of the at least one user towards the respective at least one location. In this way, missing or erroneously mapped parts of the at least one user's environment can be included in the altered-reality application.

According to various embodiments of the present invention, the method comprises sensing the physical environment of the at least one user. Further, the geometric mapping is obtained based on the sensed physical environment.

According to various embodiments of the present invention, the method comprises periodically re-determining at least a first part of the geometric mapping based on the sensed physical environment. In this way, changes in the at least one user's environment can dynamically be taken into account. According to a further developed embodiment, the method additionally comprises: deciding whether or not the geometric mapping is to be re-determined based on the re-determined first part of the geometric mapping; and, if it is decided so, re-determining at least a second part of the geometric mapping, the second part being greater than the first part. In this way, the dynamic changing can be more efficient, by deciding whether or not the re-determining is necessary, rather than naively re-determining periodically (e.g. every time a timer finishes).

According to various embodiments of the present invention, said volumetric region includes at least one of: a stationary environmental feature, such as a physical feature like walls, stairs, furniture, etc.; and a dynamic environmental feature, such as a physical creature like a person, a pet, a child, etc., or another user of the altered-reality application.

According to various embodiments of the present invention, the method further comprise determining whether said volumetric region represents a potential physical hazard, such that the associated score is such as to direct the movement of the at least one user in the altered-reality environment probabilistically away from the associated potential physical hazard. Additionally or alternatively, the method further comprises determining whether said volumetric region represents a physically secure location, such that the associated score is such as to direct the movement of the at least one user in the altered-reality environment probabilistically towards the associated physically secure location. In this way, a clear and readily understandable association can be made between volumetric regions and their desired effect in the altered-reality application.

According to various embodiments of the present invention, the method comprises: obtaining stimulus-probability associations between the plurality of virtual stimulus types and predetermined probabilities of attracting or repelling movement of the at least one user. Further, the arranging of the at least one virtual stimulus is performed based on the stimulus-probability associations. In this way, those associations can be made handily available, in order to quickly determine whether a given virtual stimulus type is likely to attract or repel a user.

According to various embodiments of the present invention, the method comprises: determining an actual movement of the at least one user in response to the arranging of the at least one virtual stimulus; comparing the determined actual movement of the at least one user with an expected probabilistically directed movement of the at least one user in response to the arranging of the at least one virtual stimulus; and, based on an outcome of the comparing, re-arranging the at least one virtual stimulus in the altered-reality environment. In this way, a feedback control loop can be implemented.

According to various embodiments of the present invention, the arranging comprises adding, repositioning and/or removing individual virtual stimuli of the at least one virtual stimulus in or from the altered-reality environment.

According to various embodiments of the present invention, the method comprises determining corporeal information pertaining to the at least one user. Further, the arranging of the at least one virtual stimulus is performed based on the determined corporeal information. In this way, more detailed information can be used in order to arrange the at least one virtual stimulus expertly.

In this context, 'corporeal' may refer to anything to do with the physical body, for example, the particular space it occupies; the speed, direction, and change of its movement or of movements of its members; etc. In other words, 'corporeal' may refer to a physical material body; and may cover such aspects of the physical material body as its location, its gaze, its skeleton position, its bounding box, etc.

According to another aspect of the present invention, there is provided a system for controlling an altered-reality application. The system comprises an input module and a processor. The input module is configured for obtaining a physical location of at least one user of the altered-reality application. The processor is configured for, based on the or each respective physical location, arranging, in an altered-reality environment of the at least one user, the altered-reality environment being situated within the altered-reality application, at least one virtual stimulus configured for probabilistically directing movement of the at least one user in the altered-reality environment away from or towards the or each respective virtual stimulus. The at least one virtual stimulus is selected from a plurality of virtual stimulus types occurring during predetermined normal operation of the altered-reality application.

It will be understood by the skilled person that the features and advantages disclosed hereinabove with respect to various embodiments of the method may also apply, *mutatis mutandis*, to various embodiments of the system.

In particular, the processor of the system may be further configured to perform the steps of the various method embodiments disclosed above.

This system can be incorporated in an end-user device such as a head-mounted display device, a mobile phone, a portable computer, a game console, etc.

According to yet another aspect of the present invention, there is provided a computer program product comprising a computer-executable program of instructions for performing, when executed on a computer, the steps of the method of any one of the method embodiments described above.

It will be understood by the skilled person that the features and advantages disclosed hereinabove with respect to embodiments of the method may also apply, *mutatis mutandis*, to embodiments of the computer program product.

According to yet another aspect of the present invention, there is provided a digital storage medium encoding a computer-executable program of instructions to perform, when executed on a computer, the steps of the method of any one of the method embodiments described above.

It will be understood by the skilled person that the features and advantages disclosed hereinabove with respect to embodiments of the method may also apply, *mutatis mutandis*, to embodiments of the digital storage medium.

According to yet another aspect of the present invention, there is provided a device programmed to perform a method comprising the steps of any one of the methods of the method embodiments described above.

According to yet another aspect of the present invention, there is provided a method for downloading to a digital storage medium a computer-executable program of instructions to perform, when executed on a computer, the steps of the method of any one of the method embodiments described above.

It will be understood by the skilled person that the features and advantages disclosed hereinabove with respect to embodiments of the method described above may also apply, *mutatis mutandis*, to embodiments of the method for downloading.

Further aspects of the present invention are described by the dependent claims. The features from the dependent claims, features of any of the independent claims and any features of other dependent claims may be combined as considered appropriate to the person of ordinary skill in the art, and not only in the particular combinations as defined by the claims.

Brief description of the figures

The accompanying drawings are used to illustrate presently preferred non-limiting exemplary embodiments of devices of the present invention. The above and other advantages of the features and objects of the present invention will become more apparent and the present invention will be better understood from the following detailed description when read in conjunction with the accompanying drawings, in which:

Figure 1 schematically illustrates an embodiment of a method according to the present invention;

Figure 2 schematically illustrates another embodiment of a method according to the present invention, e.g. a further development of the method embodiment shown in Figure 1;

Figure 3 schematically illustrates another embodiment of a method according to the present invention, e.g. a further development of the method embodiment shown in Figure 1;

Figure 4 schematically illustrates another embodiment of a method according to the present invention, e.g. a further development of the method embodiment shown in Figure 1;

Figure 5 schematically illustrates another embodiment of a method according to the present invention, e.g. a further development of the method embodiment shown in Figure 1;

Figure 6 schematically illustrates another embodiment of a method according to the present invention, e.g. a further development of the method embodiment shown in Figure 1;

Figure 7 schematically illustrates another embodiment of a method according to the present invention, e.g. a further development of the method embodiment shown in Figure 1;

Figure 8 schematically illustrates another embodiment of a method according to the present invention, e.g. a further development of the method embodiment shown in Figure 1;

Figure 9 schematically illustrates an embodiment of a system according to the present invention, e.g. for performing one of the method embodiments shown in Figures 1-8;

Figure 10 schematically illustrates an example scenario wherein an embodiment of a method according to the present invention may be performed;

Figure 11 schematically illustrates operation of another embodiment of a method according to the present invention, e.g. as performed by the system of Figure 9;

Figure 12 schematically illustrates another embodiment of a method according to the present invention, e.g. a further development of the method embodiment shown in Figure 1; and

Figure 13 schematically illustrates another embodiment of a method according to the present invention, e.g. a further development of the method embodiment shown in Figure 1.

Description of embodiments

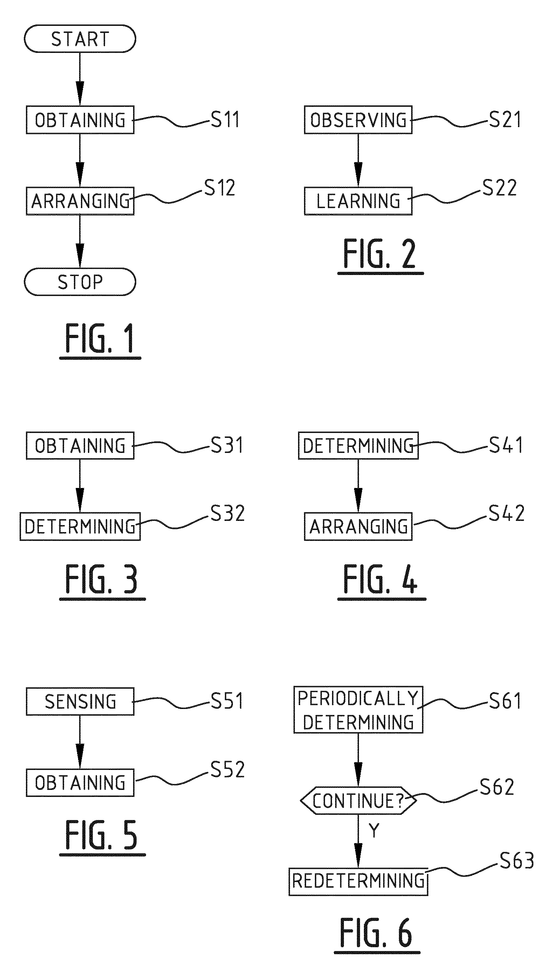

Figure 1 schematically illustrates an embodiment of a method according to the present invention. The method may comprise operation S11 and S12.

In operation S11, a physical location of at least one user of the altered-reality application may be obtained. This may be obtained, for example, from a number of sensors, for example sensors arranged in or connected to one or more head-mounted display (HMD) devices worn by the at least one user. In another example, the physical location(s) may be provided by sensors of an end-user device such as a gaming console a desktop computing device, a laptop computing device, a tablet computing device, or a mobile handheld computing device (such as a smartphone or a smartwatch). This end-user device may thus be a computing device on which the altered-reality application is being executed, equipped with suitable sensors.

Procedures for determining the location are known to a person skilled in the art, and may for example include such procedures as SLAM (Simultaneous Localization and Tracking), PTAM (Parallel Tracking and Mapping) and/or DTAM (Dense Tracking and Mapping), which use 2D and/or 3D image key points to compute a geometric mapping of a physical environment together with a physical location of the at least one user. Additionally or alternatively, other well-known procedures may be used to provide the physical location(s), for example Wi-Fi-localization, radio frequency triangulation, and/or GNSS (global navigation satellite system, e.g. GPS, global positioning system) signals.

In operation S12, based on the or each respective physical location (for example a single reading of a single user's physical location - for a static, one-user setup, or a series of readings of a single user's physical location over time - for a dynamic, one user-setup, or a plurality of readings of a plurality of users' physical locations - for a static, multi-user setup, or a plurality of series of readings of a plurality of users' physical locations over time - for a dynamic, multi-user setup), at least one virtual stimulus may be arranged in an altered-reality environment of the at least one user. This virtual stimulus may be configured for probabilistically directing movement of the at least one user in the altered-reality environment away from or towards the or each respective virtual stimulus. The altered-reality environment may be situated within the altered-reality application.

Moreover, in the embodiment shown in Figure 1, such a virtual stimulus may be part of a set predetermined virtual stimuli of the game or application itself, thus being selected from such a set of virtual stimulus types occurring during predetermined normal operation of the altered-reality application. In other words, the at least one virtual stimulus may be an in-application (for example, an in-game) virtual stimulus, such as a normally occurring object like a regular hostile or friendly object. Consequently, immersion may be maintained for the at least one user, because the at least one virtual stimulus does not lead the at least one user to consider another reality than the altered-reality. The plurality of virtual stimuli may have been predetermined (e.g. by manually or automatically selecting certain virtual stimulus types already occurring in libraries comprising in-application objects), allowing to readily select the at least one virtual stimulus from that plurality of virtual stimulus types. In some embodiments a virtual stimulus directing a user away from the "potentially dangerous" situation can be used, but in other embodiments a virtual stimulus attracting the user towards this situation can be selected. In following paragraphs this will be more explained into detail by means of some examples.

In a further developed embodiment, the at least one virtual stimulus may be selected from a predefined set of virtual stimuli prior to arranging it.

The method embodiments illustrated in Figures 2-8 may represent further developments of the method embodiment illustrated in Figure 1. As such, the operations shown in Figure 1 are not shown again in these figures. Moreover, it will be understood that the operations shown in Figures 1-8 may be combined while remaining within the scope of protection, which is determined by the appended claims.

Figure 2 schematically illustrates another embodiment of a method according to the present invention. The method may comprise operations S21 and S22.

In operation S21, at least one response of the at least one user to at least one feature of the altered-reality application may be observed. To this end, a number of sensors may for example be provided, or a number of sensors that are already used for other purposes may for example in addition be used for this purpose. Such sensor may comprise optical sensors such as cameras (2D or 3D), acoustic sensors and/or other types of sensors which can be used to capture and analyse the 3D scene environment, and/or may comprise worn sensors such as accelerometers housed in clothing or apparel of the at least one user, which can be used to determine movements of the at least one user, for example in response to the presence of a given virtual object in the altered-reality application. Furthermore, responses of users of the altered-reality application or of related altered-reality applications may have been previously observed and collected as well.

In operation S22, a behavioural pattern of the at least one user may be learned. The or each respective behavioural pattern may relate to the at least one previously observed response of the corresponding user. For example, in order to learn the behavioural pattern(s), one or more machine-learning algorithms may be used - e.g. a support vector machine, online boosting, etc.

Moreover, the learned behavioural pattern of the at least one user may be taken into account for the arranging of the at least one virtual stimulus. For a particular example, if it has been learned that a given user likely (i.e. with a high probability) swings his/her arms around violently when under attack by a virtual enemy, it may be taken into account that this user requires more space for such movements in this situation, and that he/she should therefore preferably be guided along a roomy path in order to avoid obstacles, and that the at least one virtual stimulus should be arranged in such a way as to guide the user along that roomy path. To this respect virtual stimuli attracting this user in this direction of this path may be used.

Alternatively, if it has for example been learned that a given user likely strafes (that is, moves sideways) when confronted with a virtual enemy, the virtual enemy may for example be arranged (as a virtual stimulus) in such a way that the user's predictable sideways movement may take place unhindered. In this case a virtual stimulus repelling the user, thus moving the user away from it, is selected and placed.

Figure 3 schematically illustrates another embodiment of a method according to the present invention. The method may comprise operations S31 and S32.

In operation S31, a geometric mapping between a physical environment of the at least one user and the altered-reality environment of the at least one user may be obtained.

In particular, the geometric mapping may comprise a set of associations mapping the 3D structure of the physical environment to the 3D structure of the altered-reality environment.

In an example embodiment, a number of sensors/processors included in or connected to a HMD device(s) worn by the at least one user may generate the geometric mapping. Based on camera input, physical objects, in particular static objects, such as trees, houses, parked cars, furniture, etc., but also dynamic objects, such as moving cars, people, animals, etc. may be observed/analyzed from the physical environment, and correspondences for these physical objects may be determined in the altered-reality environment. In a simple example a table in the altered-reality environment may simply map to a table in the physical environment. In an alternative example embodiment, a number of external sensors (that is, sensors not included in or connected to the HMD device(s) worn by the at least one user), such as one or more sensors included in or connected to an end-user device such as a computing device on which the altered-reality application is being executed, such as a desktop computing device, a laptop computing device, a tablet computing device, or a mobile handheld computing device (such as a smartphone or a smartwatch), a gaming console etc., may generate the geometric mapping. In a further developed preferred embodiment, the geometric mapping may for example be determined by a processing device receiving inputs from e.g. a three-dimensional depth scanner; a plurality of colour scanners and a disparity computing device; and one or more external location sensors (for example, gyroscopes, compasses, Wi-Fi localizers, etc.). These sensors may be present in the end-user device such as the HMD device or game console or mobile phone, but may also be put as a separate device.

Once the 3D scene/environment information is obtained by these sensors, the image information may be further analysed to extract therefrom the information needed to perform the mapping with the scene information in the application itself. Such procedures are known to a person skilled in the art - an example procedure for determining such a geometric mapping, by obtaining sensor input, extracting features therefrom, and generating a corresponding altered-reality model on the basis thereof, may be found in the following paper: "KinectFusion: Real-Time Dense Surface Mapping and Tracking; IEEE International Symposium on Mixed and Augmented Reality 2011".

In another example embodiment, the geometric mapping may have been generated beforehand - e.g. in altered-reality applications within a predefined room or house or premise such as an amusement park. In an alternative example embodiment, the geometric mapping may be generated dynamically, while the at least one user is using the altered-reality application - in this alternative example embodiment, dynamic objects such as moving cars, mobile machinery, people, animals, etc. may be taken into account. These embodiments may also be combined, for example in order to generate a geometric mapping for static objects beforehand and to update the geometric mapping for dynamic objects during operation.

In operation S32, a number of region-score associations may be determined, between volumetric regions of the physical environment and attraction scores representing whether movement of the at least one user is to be directed towards or away from the associated volumetric region. In a preferred embodiment, this may for example be performed automatically by consulting a pre-defined correspondence table (for example, a correspondence table created by a developer of the system/application or by the at least one user); and/or for example by consulting an automatic decision system (for example, an expert system, or a decision tree, or a neural network, etc.). To this end, an object detection and tracking system may be provided, whose output may be used by the method embodiment.

Moreover, the arranging of the at least one virtual stimulus may be performed based on the determined region-score associations and based on the geometric mapping

Figure 4 schematically illustrates another embodiment of a method according to the present invention. The method may comprise operations S41 and S42.

In operation S41, at least one location situated in the real-world environment may be determined, which at least one location lacks an altered-reality environment correspondence according to the geometric mapping. For example, it may be determined that one or more locations above a user have not been mapped - that is, there is no (correctly) corresponding part of the altered-reality environment to the physical environment - for example, if (a part of) a ceiling of a room in which the user finds herself has not been mapped (correctly).

In operation S42, the at least one virtual stimulus may be arranged at the corresponding altered-reality location corresponding to said determined at least one location. In a particular embodiment, the at least one virtual stimulus may preferably be configured for directing a gaze of the at least one user towards the respective at least one location. For example, one or more virtual stimuli may be arranged above the user in order to draw her gaze towards that location or those locations e.g. when an analysis of the physical environment reveals that a user should pay attention. In the aforementioned example when (a part of) a ceiling is found to be ill-defined) a number of virtual enemies may spawn in the vicinity of the ceiling and may start attacking the user from above, in order to draw her gaze towards that location without breaking immersion.

Without these additional features, in the case of an erroneous geometric mapping of the physical environment (e.g. parts of the real-world structural environment that have no corresponding definitions in the altered-reality environment), possibly resulting in a bad augmentation of the physical environment, a user interaction may be needed in order to alert or inform the user to take certain actions (in order to re-map the environment). This may break the immersive experience of the altered-reality application.

By using these additional features, the environment may be re-mapped without breaking immersion.

Figure 5 schematically illustrates another embodiment of a method according to the present invention. The method may comprise operations S51 and S52.

In operation S51, the physical environment of the at least one user may be sensed. For example, a number of object detection and tracking sensors may be provided to this end. It is to be remarked that object detection and tracking can also be performed by the computing device, based on the sensor inputs providing their data to this computing device.

In operation S52, the geometric mapping may be obtained based on the sensed physical environment.

Figure 6 schematically illustrates another embodiment of a method according to the present invention. The method may comprise operations S61, S62 and S63.

In operation S61, at least a first part of the geometric mapping may be periodically re-determined based on the sensed physical environment. In a first example embodiment, this first part may be a relatively small part of the geometric mapping (for example, only a limited region in a field of view of or near to the at least one user), in order to conserve computational resources. In a second example embodiment, this first part may be a relatively big part (or even the entirety) of the geometric mapping, in order to have a more complete geometric mapping.

Operations S62 and S63 may be optional - in particular if the entirety of the geometric mapping has already been re-determined in operation S61, because if the entirety of the geometric mapping has already been re-determined (sufficiently) recently (that changes can be considered negligible), there is no need to continue with the optional operations S62 and S63. However, if in operation S61 only a relatively small part has been re-determined, it is advantageous to continue with operations S62 and S63.

In operation S62, it may be decided whether or not the geometric mapping is to be re-determined based on the re-determined first part of the geometric mapping. In the figure, this is shown as a question "continue?", indicating whether or not to proceed to operation S63. For example, a number of differences between the re-determined first part of the geometric mapping and the corresponding part of the original geometric mapping may be determined by a comparison (e.g. it may be determined whether a piece of furniture has been changed or moved, or whether a person or animal has moved, etc.), and, if there are too many (e.g. more than a threshold number) such differences (or if there is at least one important such difference - e.g. if a door has been closed), it may be decided to continue.

In operation S63, at least a second part of the geometric mapping may be re-determined, the second part being greater than the first part. In other words, if it is decided in operation S62 to continue, then the method embodiment may re-determine a greater part or even all of the geometric mapping.

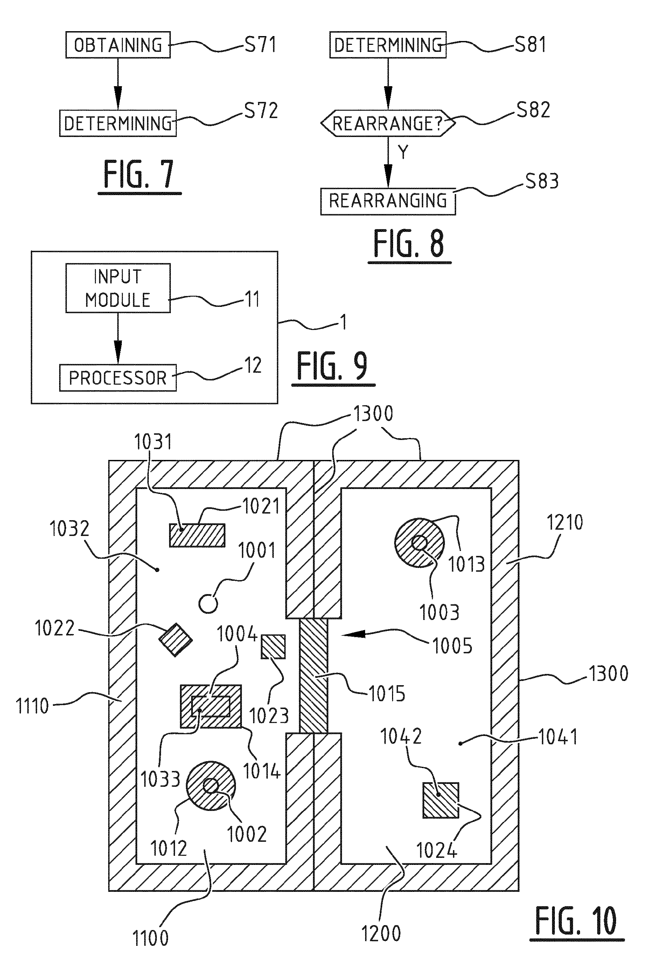

Figure 7 schematically illustrates another embodiment of a method according to the present invention. The method may comprise operation S71, that is, obtaining stimulus-probability associations between the plurality of virtual stimulus types and predetermined probabilities of attracting or repelling movement of the at least one user. Preferably, the arranging of the at least one virtual stimulus may be performed based on stimulus-probability associations. Such stimulus-probability associations may for example have been manually determined beforehand, or may be predefined, or may for example be generated on-the-spot by a computing device, preferably an artificially intelligent computing device configured for generating such associations, and for verifying and optionally improving their accuracy through machine learning.

Additionally or alternatively, the method may comprise operation S72, that is, determining corporeal information pertaining to the at least one user. In this case, the arranging of the at least one virtual stimulus may be performed based on the determined corporeal information.

In the illustrated embodiment, the operations are shown in the order S71 and S72. However, in another embodiment, the order may be S72 and then S71. Also, the two operations make take place simultaneously or independently.

Figure 8 schematically illustrates another embodiment of a method according to the present invention. The method may comprise operations S81, S82, and S83.

In operation S81, an actual movement of the at least one user in response to the arranging of the at least one virtual stimulus may be determined. For example, after a virtual enemy has been spawned in some location, the at least one user's reaction movement may be determined (for example, does the at least one user move away from the virtual enemy, or towards it? does he/she remain in place/ duck/ strafe? etc.).

In operation S82, the observed/determined actual movement of the at least one user may be compared with an expected probabilistically directed movement of the at least one user in response to the arranging of the at least one virtual stimulus. For example, it may have been expected (that is, if the probability was relatively high, for example greater than 50%) that the user would move away, yet the user does not move away.

In operation S83, based on an outcome of the comparing in operation S82, the at least one virtual stimulus may be re-arranged in the altered-reality environment. In the above-given example, the virtual enemy may be moved closer to the user, and/or another virtual enemy may be spawned closer to the user than the original virtual enemy, and/or a positive in-game object (such as a health-pack) may be spawned somewhere else in order to lure the user.

Figure 9 schematically illustrates an embodiment of a system 1 according to the present invention. The system 1 may comprise an input module 11 and a processor 12. The input module 11 may be configured for obtaining a physical location of at least one user of the altered-reality application. The processor 12 may be configured for, based on the or each respective physical location, arranging, in an altered-reality environment of the at least one user, the altered-reality environment being situated within the altered-reality application, at least one virtual stimulus configured for probabilistically directing movement of the at least one user in the altered-reality environment away from or towards the or each respective virtual stimulus. The t least one virtual stimulus may be selected from a plurality of virtual stimulus types occurring during predetermined normal operation of the altered-reality application. In a particular further developed embodiment, the input module 11 may be operatively coupled to the processor 12 in order to provide to it the obtained physical location(s). In another further developed embodiment, the processor 12 may for example be coupled to a computer memory (not shown) holding (data of) the altered-reality application, and the processor 12 may be configured to execute the altered-reality application (that is, to obtain the inputs that it needs, and to provide the outputs of the altered-reality application to the at least one user).

Figure 10 schematically illustrates an example scenario wherein an embodiment of a method according to the present invention may be performed.

The figure shows a building with two rooms 1100 and 1200, enclosed and separated by walls 1300. Between the two rooms 1100 and 1200, a passage 1005 exists, where the walls 1300 are interrupted. A piece of furniture 1004 (e.g. a rectangular table) is shown in room 1100. This building is of course just an example physical environment for the altered-reality application. The altered-reality application may include an altered-reality environment corresponding with the physical environment.

There are three persons 1001, 1002 and 1003 in the rooms. In room 1100, person 1001 is a first user of the altered-reality application, and person 1002 is a second user of the altered-reality application. In room 1200, person 1003 is a person who is not a user of the altered-reality application.

In the scenario, a number of volumetric regions may have been defined in the physical environment. In particular, around the walls 1300 (that is, in the vicinity, e.g. within 50 cm, of the wall surface) volumetric region 1110 (for room 1100) and volumetric region 1210 (for room 1200) may have been defined. Around the piece of furniture 1004, volumetric region 1014 may have been defined. In room 1100, volumetric regions 1021, 1022 and 1023, and in room 1200, volumetric region 1024 may have been defined. Around user 1002 and person 1003, volumetric regions 1012 and 1013 may have been defined. These volumetric regions may have been defined automatically, or this may have been done manually. In the case of regions around person, these regions may be updated periodically or continuously, depending on movement of the respective person.

Volumetric regions 1110, 1210, 1012, 1014, 1022, 1021 and 1013 (shown with right-slanting cross-hatching in the figure) may be associated with potential physical hazards - for example, the walls and furniture of a room, or people, etc. These volumetric regions may preferably be associated with a negative attraction score, wherein a negative attraction score represents that the movement of the at least one user in the altered-reality environment is probabilistically away from the associated potential physical hazard. It will be understood that the term 'negative attraction score' (and likewise, 'positive attraction score') is meant for purposes of clarity, and does not necessarily need to correspond to a mathematically negative (resp. positive) value.

Volumetric regions 1023, 1015 (predefined in passage 1005) and 1024 (shown with left-slanting cross-hatching in the figure) may be associated with physically secure (or likely secure) locations. These volumetric regions may preferably be associated with a positive attraction score, wherein a positive attraction score represents that the movement of the at least one user in the altered-reality environment is probabilistically towards the associated physically secure location.

The method embodiment may comprise obtaining a physical location of the at least one user (in this example, user 1001 and user 1002) of the altered-reality application. The method embodiment may further comprise, arranging at least one virtual stimulus in an altered-reality environment of the at least one user, based on the or each respective physical location. The at least one virtual stimulus may preferably be configured for probabilistically directing movement of the at least one user in the altered-reality environment away from or towards the or each respective virtual stimulus. The altered-reality environment may be situated within the altered-reality application.

In other words, at least one virtual stimulus (for example, one or more virtual hostile objects, such as virtual enemies; one or more virtual friendly objects, such as bonuses; one or more directional sounds; and/or one or more haptic signal sensations) may be arranged in the altered-reality environment.

For example, on location 1032 inside of volumetric region 1021 associated with a negative attraction score, a virtual enemy may be spawned as a virtual stimulus, in order to direct user 1001 away from the region.

Alternatively, location 1032 may be outside of volumetric region 1021 (shown in the figure by a duplicate location 1032). In a further developed embodiment, the choice of which location 1032 to use may for example depend on learned behaviour of user 1001 or even of user 1002 — for example, whether user 1002 is likely to approach in order to aid a cooperative user under attack, etc.

For example, on location 1033 in volumetric region 1014 (that is, at or near piece of furniture 1004) also associated with a negative attraction score, another virtual enemy, and/or a repelling directional sound may be arranged as a virtual stimulus in the altered-reality environment.

The arranging of the at least one virtual stimulus may in other words take into account region-score associations, if these have been determined, as described above.

For example, on location 1041 or 1042 (near resp. in volumetric region 1024), a virtual bonus may be, and/or an appealing directional sound may be arranged as a virtual stimulus in the altered-reality environment.

In this manner, user 1001 may be 'steered' (i.e. directionally guided) in the altered-reality environment (and thus also in the physical environment) without breaking immersion, while the method may take care to keep the user out of the regions where he or she should not go.

According to an exemplary embodiment of the present invention, the method may arrange the at least one virtual stimulus (in order to adjust the altered-reality application's flow), based on a physical location of the at least one user of the altered-reality application, and optionally further based on at least one of the following:

(1) a current gaze of the user in the real-world,

(2) a learned (preferably 3D) user behaviour / user movement in response to certain altered reality situations,

(3) a geometric (preferably 3D) mapping of the physical environment to the virtual environment and

(4) a number of associations between volumetric regions and positive / negative attraction scores.

By arranging the at least one virtual stimulus in this way, the method may (in a manner of speaking) 'steer' a movement (and optionally a gaze) of the at least one user without breaking immersion. In other words, the user may automatically and naturally aid the altered-reality application in order to enhance the experience in a non-intrusive manner.

According to a first exemplary embodiment of the present invention, an augmented-reality application may be considered, for example an augmented-reality game for one player. In order to avoid potentially hazardous locations and/or situations (in the real world), one or more 'no-go zones' may be defined, corresponding to static and/or dynamic volumetric regions (which may include 3D regions, 2D planes, or even simple point locations) which should be avoided by the user of the altered-reality application. Examples of such no-go zones may for example include static objects/locations like e.g. walls, chairs, certain parts of a room to avoid; and dynamic objects like other people in the room or other players. These zones may for example be automatically detected and tracked, or may for example be manually defined by user input, e.g. in the case of a user defining a restricted area in the physical environment, where the user should never be present during the execution of the altered-reality application.

According to a particular exemplary further developed embodiment of the present invention, system 1 of Figure 9 may further comprise a head-mounted display (HMD) device, preferably equipped with one or more 3D range scanners, one or more 2D cameras, and/or one or more sensor devices (e.g. gyroscopes, compass, Wi-Fi-localization, etc.).

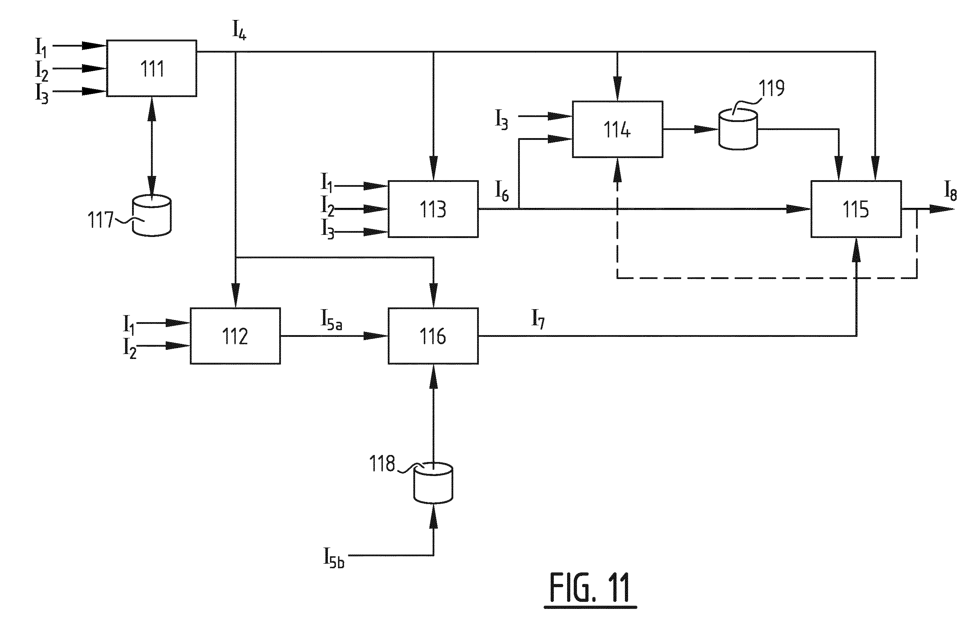

Figure 11 schematically illustrates operation of another embodiment of a method according to the present invention.

Depth information 11 coming for example from 3D range scanners, Colour information 12 coming for example from 2D cameras, and/or sensor information 13 (e.g. gyroscopic readings, Wi-Fi readings, etc.), may be combined in order to (more or less accurately) compute a geometric (preferably 3D) mapping 14 of the physical environment in operation 111. Geometric mappings 14 from previous time instances or from other sources (e.g. online mapping service providers) may also be used to aid in determining the geometric mapping 14. Moreover, the current result of determining this geometric mapping may preferably be stored for use at a later time. To this end, a data storage 117 may be provided.

The depth information 11 coming for example from the 3D range scanners, and/or the colour information 12 coming for example from the 2D cameras, may be used in object recognition and tracking in operation 112, in order to sense the physical environment. Example implementations of such object recognition and tracking are known to a person skilled in the art, and can for example be found in Tracking-Learning-Detection; IEEE TPAMI 2012 and Semantic segmentation using regions and parts; CVPR 2012. The result of operation 112 may be that the physical location of (potentially hazardous) objects (like e.g. walls, chairs, other persons, etc.) related to the geometric mapping 14 of the physical environment is found — this output is shown as 15a in the figure. These tracked objects and their physical locations 15a may be used to compute positive or negative attraction scores 17 for volumetric regions in the physical environment in operation 116. A negative attraction score may be given to volumetric regions which would result in potentially dangerous locations or situations, when the user moves towards that position. A positive attraction score may be given to volumetric regions where free user movement may be possible without leading to potentially hazardous situations. These positive or negative attraction scores 17 may be determined in operation 116, using the tracked objects and their respective locations in the physical environment 15a, and optionally using region-score associations as explained above, which may for example be stored in a database 118. These scoring associations may be learned by system 1 itself, may be provided by the altered-reality application developer, or may be provided by the altered-reality user himself, by manually marking certain physical objects or locations, e.g. as 'no-go zones' - this input is shown as 15b in the figure.

The physical location and/or gaze 16 of the at least one altered-reality application user may be determined in operation 113, based on information I1, I2, I3 and/or 14, and may be used as input in operation 114, optionally together with information 13 indicating sensor information and preferably with information 14 indicating the geometric mapping, to learn the user's behaviour or movement in certain altered-reality scenarios, e.g. how does the user avoid virtual objects, how does the user move through a virtual world, does he move quickly around the world or does he behave calmly when being virtually attacked, does he move his arms around violently, etc. This behaviour learning in operation 114 may make use of the physical location(s) of the at least one user 16, features of the current altered-reality application 18 (e.g. which scenario is being executed) (for example via a feedback loop), and optionally additional sensor information 13. Machine-learning algorithms may be used to learn the user behaviour (like e.g. support vector machines, online boosting, etc.). Information about how the at least one user behaves and/or moves in certain altered-reality scenarios may be stored in a database 119 for later use. Information I4, I6, I7 and/or information retrieved from database 119 may be used in operation 115 to determine the flow of the altered-reality application 18 (that is, to execute the computer program of the altered-reality application), by arranging at least one virtual stimulus as explained above.

Consequently, particular embodiments of the present invention may use one or more of the following: a geometric mapping 14; the positive or negative attraction scores associated with volumetric regions in the physical environment 17; the physical location and optionally the gaze of the at least one user 16; and the learned user behaviour and/or movement in certain altered-reality scenarios, e.g. from database 119.

According to a second exemplary embodiment of the present invention, a virtual-reality application may be considered, for example a virtual-reality game for multiple players. In particular, in such an embodiment, learned behaviour of one user may be used for arranging virtual stimuli for another user, and *vice versa.*

According to a third exemplary embodiment of the present invention, the system may comprise at least one additional sensor, not being part of the HMD, and configured for capturing corporeal information pertaining to the at least one user. In this way, more detailed information about the at least one user may be obtained, such as virtual skeleton extraction for more accurate virtual limb positioning, including information beyond the sense of the at least one user (for example, when furniture is moved outside of the at least one user's field of view). Communication between the at least one additional sensor and the processor may take place via a central server or directly between the individual devices.

According to a fourth exemplary embodiment of the present invention, the at least one user may be made to move or to look in certain directions in the physical environment, for example in order to map ill-defined regions or objects, i.e. regions or objects (likely) existing in the physical environment but lacking a well-defined correspondence in the altered-reality environment. By adjusting the altered-reality application's flow (by arranging one or more virtual stimuli at the corresponding altered-reality location(s)), the at least one user may for example be made to move or to look in certain directions by the altered-reality application.

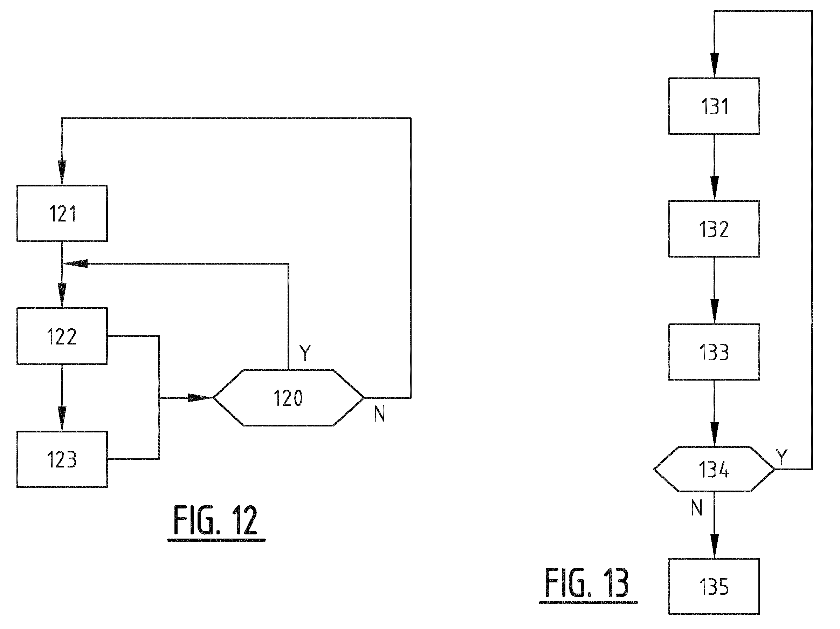

The method embodiments illustrated in Figures 12 and 13 may represent further developments of the method embodiment illustrated in Figure 1. As such, the operations shown in Figure 1 are not shown again in these figures. Moreover, it will be understood that the operations shown in Figures 12 and 13 may be combined with each other and/or with those shown in Figures 2-8, while remaining within the scope of protection, which is determined by the appended claims.

Figure 12 schematically illustrates another embodiment of a method according to the present invention.

According to this embodiment, a rudimentary virtual scene may be composed in operation 121, containing a minimally needed amount of virtual locations and virtual objects, in order to convey the needed virtual information to the at least one user. At least one virtual stimulus may be arranged in the altered-reality environment in operation 122 proactively (that is, before the at least one user encounters issues), in order to attract or avoid user movement and optionally gaze to certain physical locations. For example, virtual objects which probabilistically are likely to impair a positive user attraction (e.g. health-packs, in the case of a game) should not be positioned in or near volumetric regions associated with a negative attraction score, and virtual objects which probabilistically are likely to impair a negative user attraction (e.g. enemies, in the case of a game) should not be positioned in or near volumetric regions with a positive volumetric attraction score, or should not be placed in a physical location which would direct user movement to a physical location with a negative volumetric attraction score, as will be explained below.

User movement and optionally gaze in the physical environment may be monitored (once or continuously or periodically) in operation 123 in order to verify whether or not the exhibited user behaviour corresponds to the expected user behaviour. In other words, it may be determined in operation 123 whether the user is actually being attracted to the physical locations with a positive attraction score, and whether the user is sufficiently far away from physical locations with a negative attraction score? For example, a threshold may be used in a decision operation 120 on these volumetric regions' attraction scores and current user location(s) and optionally gaze(s) in the physical environment, in order to detect the need for a progressive or an immediate intervention. As soon as intervention is needed (the "Y" output of decision operation 120), this may for example be flagged, for example in order to re-arrange the at least one virtual stimulus in operation 122. Else, the method embodiment may return back to operation 121.

Figure 13 schematically illustrates another embodiment of a method according to the present invention.

As an example, an iterative way of determining a possible location for arranging at least one virtual stimulus will be described. In this example, the learned user behaviour in response to a certain virtual stimulus (with a positive or negative attraction score) may be given as an input. This behaviour could include e.g. how the physical position of the centre-of-mass of the at least one user moves (relative to the physical location of the virtual object) over a certain time frame (potentially split up into smaller time steps, each with their own user movement information), in response to the presence of the virtual stimulus; or how the physical position and size of the bounding-box of the user changes; or how the physical position of certain user skeleton keypoints(e.g. fingers, elbows, knees, etc.) changes relative to the physical position of the virtual stimulus, over a time period, in response to the presence of the virtual stimulus.

A virtual stimulus of a virtual stimulus type associated with a certain positive or negative attraction score may be placed in operation 131 at a certain location in the altered-reality environment corresponding to a physical location. Based on the learned user behaviour related to the virtual stimulus type; the proposed physical location of the virtual object, and the current physical location(s), a trajectory of the at least one user in the physical environment may be predicted in operation 132. This trajectory may include how the centre-of-mass of the at least one user moves in the physical environment over a certain time period, how the bounding-box of the user moves, and grows or shrinks, in the physical environment; or how certain user skeleton keypoints move in the physical environment. This user trajectory may be compared to the combined positive or negative attraction scores present in the altered-reality environment, in order to detect real-world situations which should be avoided or be encouraged, in operation 133 to indicate whether a potential danger is present. The output of the detection in operation 133 may be led to a decision operation 134. As soon as a hazardous real-world situation is detected (the "Y" output of decision operation 134), it may be decided to return to operation 131 in order to re-arrange the at least one virtual stimulus, i.e. to add, move or remove virtual stimuli. If and when eventually no hazardous real-world situation is detected (the "N" output of decision operation 134), it may be decided to take the then current location of the virtual stimulus as output in operation 135.

Another method of proactively re-arranging the at least one virtual stimulus may use an energy minimization procedure. It may for example be assumed that a fixed number of possible locations for placing virtual stimuli of virtual stimulus types associated with a positive attraction score is given and indicated by P, and that a fixed number of possible locations for placing virtual stimuli of virtual stimulus types associated with a negative attraction score is given and indicated by N.

$$ p \in P $$

$$ n \in N $$

The total number of virtual objects with a positive attraction score may be given as input and indicated by q, and the total number of virtual objects with a negative attraction score may be given as input and indicated by $m$.

The cost of travelling along a predicted user path, starting from the current physical location $u$ and impaired by a certain virtual object on a certain location, indicated by $v$, may for example be indicated by the function $C(u,v)$, and may be computed depending on the type and contents of the specific altered-reality application. One example computation of such a cost of the path between location $u$ (the current physical location of a given user of the altered-reality application) to the predicted physical location $u'$, impaired by the presence of a virtual object on location $v$, may be to take the most negative attraction score value that would be encountered along the physical path between locations $u$ and $u'$, that is. by solving $\arg\max\limits_{V \in \{P,N\}} \left( \min \left( \forall\limits_{v \in V} C(u,v) \right) \right)$

wherein V is a vector of the form $\{p_0, p_1, ..., p_q, n_0, n_1, ..., n_m\}$, indicating a possible combination of $q$ selected locations holding virtual objects with a positive attraction score, and $m$ locations holding virtual objects with a negative attraction score.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the present invention. It will thus be appreciated that those skilled in the art will be able to devise various arrangements that, although not explicitly described or shown herein, embody the principles of the present invention and are included within its scope. Furthermore, all examples recited herein are principally intended expressly to be only for pedagogical purposes to aid the reader in understanding the principles of the present invention and the concepts contributed by the inventor(s) to furthering the art, and are to be construed as being without limitation to such specifically recited examples and conditions. Moreover, all statements herein reciting principles, aspects, and embodiments of the present invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the present invention. Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the present invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present invention, expressions such as "comprise", "include", "have", "may comprise", "may include", or "may have" indicate existence of corresponding features but do not exclude existence of additional features.

Whilst the principles of the present invention have been set out above in connection with specific embodiments, it is to be understood that this description is merely made by way of example and not as a limitation of the scope of protection which is determined by the appended claims.

**Claims**

1. A method for controlling an altered-reality application, the method comprising:

   - obtaining a physical location of at least one user of the altered-reality application; and
   - based on the or each respective physical location, arranging, in an altered-reality environment of the at least one user, the altered-reality environment being situated within the altered-reality application, at least one virtual stimulus configured for probabilistically directing movement of the at least one user in the altered-reality environment away from or towards the or each respective virtual stimulus;

   wherein the at least one virtual stimulus is selected from a plurality of virtual stimulus types occurring during predetermined normal operation of the altered-reality application.

2. The method of claim 1,
   wherein the plurality of virtual stimulus types occurring during predetermined normal operation of the altered-reality application comprises at least one of the following: a virtual hostile object type; a virtual friendly object type; a directional sound type; and a haptic signal type.

3. The method of any one of the previous claims, comprising:

   - observing at least one response of the at least one user to at least one feature of the altered-reality application; and
   - learning a behavioural pattern of the at least one user, wherein the or each respective behavioural pattern relates to the at least one previously observed response of the corresponding user; and wherein the learned behavioural pattern of the at least one user is taken into account for the arranging of the at least one virtual stimulus.

4. The method of any one of the previous claims, comprising:

   - obtaining a geometric mapping between a physical environment of the at least one user and the altered-reality environment of the at least one user; and
   - determining region-score associations between volumetric regions of the physical environment and attraction scores representing whether movement of the at least one user is to be directed towards or away from the associated volumetric region; and

   wherein the arranging of the at least one virtual stimulus is performed based on the determined region-score associations and based on the geometric mapping.

5. The method of claim 4,
   wherein the arranging of the at least one virtual stimulus comprises:

   - determining at least one location situated in the real-world environment, which at least one location lacks an altered-reality environment correspondence according to the geometric mapping; and

- arranging the at least one virtual stimulus at the corresponding altered-reality location corresponding to said determined at least one location, wherein the at least one virtual stimulus is configured for directing a gaze of the at least one user towards the respective at least one location.

6. The method of any one of the claims 4-5, comprising:

   - sensing the physical environment of the at least one user; and

   wherein the geometric mapping is obtained based on the sensed physical environment.

7. The method of any one of the claims 4-6, comprising:

   - periodically re-determining at least a first part of the geometric mapping based on the sensed physical environment; and

   wherein the method optionally comprises:

   - deciding whether or not the geometric mapping is to be re-determined based on the re-determined first part of the geometric mapping; and
   - if it is decided so, re-determining at least a second part of the geometric mapping, the second part being greater than the first part.

8. The method of any one of the claims 4-7, wherein said volumetric region includes at least one of: a stationary environmental feature, such as a physical feature like walls, stairs, furniture, etc.; and a dynamic environmental feature, such as a physical creature like a person, a pet, a child, etc., or another user of the altered-reality application.

9. The method of any one of the claims 4-8, further comprising determining whether said volumetric region represents a potential physical hazard, such that the associated score is such as to direct the movement of the at least one user in the altered-reality environment probabilistically away from the associated potential physical hazard; and/or determining whether a volumetric region represents a physically secure location, such that the associated score is such as to direct the movement of the at least one user in the altered-reality environment is probabilistically towards the associated physically secure location.

10. The method of any one of previous claims, comprising:

    - determining an actual movement of the at least one user in response to the arranging of the at least one virtual stimulus;
    - comparing the determined actual movement of the at least one user with an expected probabilistically directed movement of the at least one user in response to the arranging of the at least one virtual stimulus; and
    - based on an outcome of the comparing, re-arranging the at least one virtual stimulus in the altered-reality environment.

11. The method of any one of the previous claims, wherein the arranging comprises adding, repositioning and/or removing individual virtual stimuli of the at least one virtual stimulus in or from the altered-reality environment.

12. The method of any one of the previous claims, comprising

    - determining corporeal information pertaining to the at least one user; and

    wherein the arranging of the at least one virtual stimulus is performed based on the determined corporeal information.

13. A system for controlling an altered-reality application; the system comprising:

    - an input module configured for obtaining a physical location of at least one user of the altered-reality application; and
    - a processor configured for, based on the or each respective physical location, arranging, in an altered-reality environment of the at least one user, the altered-reality environment being situated within the altered-reality application, at least one virtual stimulus configured for probabilistically directing movement of the at least one user in the altered-reality environment away from or towards the at least one virtual stimulus;

    wherein at least one virtual stimulus is selected from a plurality of virtual stimulus types occurring during predetermined normal operation of the altered-reality application.

14. A computer program product comprising a computer-executable program of instructions for performing, when executed on a computer, the steps of any one of the methods of claim 1-12.

15. An end-user device comprising a system according to claim 13.

START

OBTAINING — S11

ARRANGING — S12

STOP

**FIG. 1**

OBSERVING — S21

LEARNING — S22

**FIG. 2**

OBTAINING — S31

DETERMINING — S32

**FIG. 3**

DETERMINING — S41

ARRANGING — S42

**FIG. 4**

SENSING — S51

OBTAINING — S52

**FIG. 5**

PERIODICALLY DETERMINING — S61

CONTINUE? — S62

Y

REDETERMINING — S63

**FIG. 6**

OBTAINING —— S71

↓

DETERMINING —— S72

**FIG. 7**

DETERMINING —— S81

↓

⟨ REARRANGE? ⟩ —— S82

Y ↓

REARRANGING —— S83

**FIG. 8**

INPUT MODULE —— 11

↓

PROCESSOR —— 12

—— 1

**FIG. 9**

1300

1031
1021
1032
1001
1110
1022
1004
1023
1033
1014
1012
1002
1100

1210
1013
1003
1005
1015
1300
1042
1041
1024
1200

**FIG. 10**

FIG. 11

EP 3 301 544 A1

FIG. 13

FIG. 12

Europäisches
Patentamt

European
Patent Office

Office européen
des brevets

# EUROPEAN SEARCH REPORT

Application Number

EP 16 30 6281

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/124502 A1 (SAWYER DAVID [US] ET AL) 5 May 2016 (2016-05-05) * abstract * * paragraph [0002] - paragraph [0006] * * paragraph [0023] - paragraph [0066]; figures 1-7 * | 1-15 | INV. G06F3/01 G06F1/16 G06T19/00 G02B27/01 A63F13/216 A63F13/217 A63F13/65 A63F13/67 |
| X | US 2013/328928 A1 (YAMAGISHI TAKESHI [JP] ET AL) 12 December 2013 (2013-12-12) * abstract * * paragraph [0001] - paragraph [0008] * * paragraph [0020] - paragraph [0059]; figures 1-8 * | 1-15 | |
| X | US 2016/171770 A1 (PEDROTTI OWEN WALTER [US] ET AL) 16 June 2016 (2016-06-16) * abstract * * paragraph [0001] - paragraph [0012] * * paragraph [0028] - paragraph [0034] * * paragraph [0072] - paragraph [0091]; figures 10-15 * | 1-15 | |
| X | US 2016/184703 A1 (BRAV EHREN J [US] ET AL) 30 June 2016 (2016-06-30) * abstract * * paragraph [0002] - paragraph [0011] * * paragraph [0038] - paragraph [0040] * * paragraph [0073]; figure 1 * * paragraph [0099] - paragraph [0103]; figures 1, 7A, 7B * * paragraph [0116]; figure 1 * * paragraph [0135] - paragraph [0136]; figures 1, 8-10C, 15 * | 1-15 | TECHNICAL FIELDS SEARCHED (IPC) G06F A63F G06T G02B |

-/--

The present search report has been drawn up for all claims

| Place of search | Date of completion of the search | Examiner |
|---|---|---|
| The Hague | 9 March 2017 | Hasnas, Sergiu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/193982 A1 (MIHELICH PATRICK [US] ET AL) 9 July 2015 (2015-07-09)<br>* abstract *<br>* paragraph [0002] *<br>* paragraph [0070] - paragraph [0072]; figure 12 *<br>----- | 1,5, 13-15 | |

TECHNICAL FIELDS
SEARCHED      (IPC)

The present search report has been drawn up for all claims

| Place of search | Date of completion of the search | Examiner |
|---|---|---|
| The Hague | 9 March 2017 | Hasnas, Sergiu |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 30 6281

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2017

| Patent document cited in search report | | Publication date | Patent family member(s) | | Publication date |
|---|---|---|---|---|---|
| US 2016124502 | A1 | 05-05-2016 | US 2016124502 A1 | | 05-05-2016 |
| | | | WO 2016073783 A1 | | 12-05-2016 |
| US 2013328928 | A1 | 12-12-2013 | CN 103480154 A | | 01-01-2014 |
| | | | JP 5580855 B2 | | 27-08-2014 |
| | | | JP 2013257716 A | | 26-12-2013 |
| | | | US 2013328928 A1 | | 12-12-2013 |
| US 2016171770 | A1 | 16-06-2016 | NONE | | |
| US 2016184703 | A1 | 30-06-2016 | US 2016184703 A1 | | 30-06-2016 |
| | | | US 2016296839 A1 | | 13-10-2016 |
| US 2015193982 | A1 | 09-07-2015 | NONE | | |

EPO FORM P0459

For more details about this annex : see Official Journal of the European Patent Office, No. 12/82